# EUROPEAN PATENT APPLICATION

(11) **EP 4 761 329 A1**
(43) Date of publication of application: **17.06.2026**
(21) Application number: 24868613.1
(22) Date of filing: 13.09.2024
(51) Int. Cl.: H04W 24/02, H04W 8/24, G06N 20/00

(54) **METHOD AND DEVICE FOR SUPPORTING ARTIFICIAL INTELLIGENCE MODEL IN WIRELESS COMMUNICATION SYSTEM**

(30) Priority: 20.09.2023 KR 20230125592
(71) Applicant: Samsung Electronics Co., Ltd., Suwon-si, Gyeonggi-do 16677 (KR)
(72) Inventor: KIM, Hyesung, Suwon-si, Gyeonggi-do 16677 (KR); PARK, Jungshin, Suwon-si, Gyeonggi-do 16677 (KR)
(74) Representative: Gulde & Partner
(86) International application number: PCT/KR2024/013962
(87) International publication number: WO 2025/063636

(57) **Abstract**

The present disclosure relates to a 5G or 6G communication system for supporting a higher data transmission rate. Specifically, the present disclosure provides a method and a device for supporting an AI-based operation in a wireless communication system (or mobile communication system).

## Description

### [Technical Field]

Embodiments of the disclosure relate to a wireless communication system and, more specifically, to a device and a method for supporting an artificial intelligence model in a wireless communication system.

### [Background Art]

5^{th} generation (5G) mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as vehicle-to-everything (V2X) for aiding driving determination by autonomous vehicles based on information regarding positions and states of vehicles transmitted by the vehicles and for enhancing user convenience, new radio unlicensed (NR-U) aimed at system operations conforming to various regulation-related requirements in unlicensed bands, NR UE power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended reality (XR) for efficiently supporting augmented reality (AR), virtual reality (VR), mixed reality (MR) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

With the advancement of mobile communication systems as described above, various services can be provided, and accordingly, there is a need for methods to effectively support such services.

Meanwhile, a user equipment (UE) may use artificial intelligence (AI) models to improve wireless communication performance, and a plurality of such AI models may exist. However, since the UE does not possess information on external factors such as the surrounding environment, it is unable to select an AI model that reflects such factors. Therefore, information needs to be provided to the UE in order to appropriately select an AI model.

In addition, even when the UE is capable of performing operations based on an AI model, conventional communication operations without using the AI model may provide better performance depending on certain conditions or environmental factors. Accordingly, information needs to be provided to the UE so that the UE can activate or deactivate AI model-based operations.

That is, information needs to be provided to enable the UE to determine whether to use an AI model or which AI model to select, and there is a need for a method and an apparatus in a wireless communication system to support such determination.

### [Disclosure of Invention]

### [Technical Problem]

An aspect of a method and a device according to an embodiment of the disclosure is to provide a method and a device for supporting an artificial intelligence model-based operation in a wireless communication system.

In addition, an aspect of a method and a device according to an embodiment of the disclosure is to provide a method and a device for providing information relating to whether to use an artificial intelligence model and for model selection.

### [Solution to Problem]

A method performed by a terminal in a wireless communication system according to an embodiment of the disclosure, the method including transmitting a registration request message including capability information of the terminal associated with an AI-based operation to a network entity, receiving, from the network entity, an indicator indicating whether an AI-based operation is allowed and policy information on an AI-based operation, and activating an AI-based operation.

A method performed by a first network entity in a wireless communication system according to an embodiment of the disclosure, the method including receiving a registration request message including capability information of a terminal associated with an AI-based operation from the terminal, selecting a second network entity, based on the capability information of the terminal, transmitting an AI-based operation-related policy request message to the second network entity, receiving policy information related to an AI-based operation from the second network entity, and transmitting the policy information related to an AI-based operation to the terminal.

### [Advantageous Effects of Invention]

According to an embodiment of the disclosure, the use of an AI model may be supported in a wireless communication system, thereby improving wireless communication performance under various conditions and environments.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a structure of a wireless communication system supporting an artificial intelligence-based operation according to an embodiment of the disclosure.
FIG. 2 illustrates a method for configuring policy information related to an artificial intelligence-based operation according to an embodiment of the disclosure.
FIG. 3 illustrates a method for providing model selection and management assistance information to a terminal supporting an artificial intelligence-based operation according to an embodiment of the disclosure.
FIG. 4 illustrates components of a UE according to an embodiment of the disclosure.
FIG. 5 illustrates components of a network entity according to an embodiment of the disclosure.

### [Mode for the Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

The 3GPP, which is responsible for cellular mobile communication standardization, has introduced a new core network structure named 5G core (5GC) and is pursuing the standardization in order to push evolution from the conventional 4G LTE system into a 5G system. 5GC supports the following distinguishable functions, compared to an evolved packet core (EPC) that is a network core for the conventional 4G.

First, in 5GC, a network slice function is introduced. As the requirements for 5G, 5GC needs to support various kinds of terminal types and services (e.g., eMBB, URLLC, or mMTC service). Various types of services each have different requirements for a core network. For example, the eMBB service may require a high data rate, and the URLLC service may require high stability and low latency. Network slicing has been provided as one of technologies for satisfying these various service requirements.

The network slicing is a method of producing several logical networks by virtualizing one physical network, wherein each network slice instance (NSI) may have different characteristics. Therefore, each NSI has a network function (NF) suitable for the characteristics thereof so as to satisfy various service requirements. If an NSI suitable for the required service characteristics is assigned to each terminal, then various 5G services may be efficiently supported.

Secondly, 5GC may easily support network virtualization paradigm through separation between mobility management and session management functions. In the conventional 4G long term evolution (LTE), services may be provided through signaling exchange with single core equipment called a mobility management entity (MME) which is responsible for registration, authentication, and mobility management and session management functions for all terminals. However, in 5G, as the number of terminals has explosively increased and mobility and traffic/session characteristics to be supported have been subdivided according to the respective terminal types, scalability for adding entities according to required functions is inevitably reduced if single equipment such as the MME supports all the functions. Therefore, in order to improve scalability in terms of signaling loads and the function/implementation complexity of core equipment responsible for a control plane, various functions are being developed based on a structure in which a mobility management function and a session management function are separated.

Hereinafter, various embodiments will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, each block of the flowchart illustrations, and combinations of blocks in the flowchart illustrations, may be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in various embodiments of the disclosure, the "unit" refers to a software element or a hardware element, such as a field programmable gate array (FPGA) or an application specific integrated circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit," or divided into a larger number of elements, or a "unit." Moreover, the elements and "units" may be implemented to reproduce one or more CPUs within a device or a security multimedia card.

In the following description, a base station is an entity that allocates resources to terminals, and may be at least one of an eNode B (eNB), a Node B, a base station (BS), a radio access network (RAN), an access network (AN), a RAN node, an NR NB, a gNB, a wireless access unit, a base station controller, and a node on a network. A terminal may include a user equipment (UE), a mobile station (MS), a cellular phone, a smartphone, a computer, or a multimedia system capable of performing a communication function. In various embodiments of the disclosure, the case where the terminal is a UE will be described by way of example. Furthermore, in the following description of various embodiments, systems based on LTE, LTE-A, or NR may be described by way of example, but various embodiments of the disclosure may also be applied to other communication systems having similar technical backgrounds or channel types. Moreover, based on determinations by those skilled in the art, various embodiments of the disclosure may also be applied to other communication systems through some modifications without significantly departing from the scope of the embodiments of the disclosure.

Various embodiments of the disclosure will be described using terms used in some communication standards (e.g., the 3rd generation partnership project (3GPP)), but they are for illustrative purposes only. Various embodiments of the disclosure may also be easily applied to other communication systems through modifications. Hereinafter, some terms used in a core network of the disclosure will be defined before explanation:
- AMF: access and mobility management function;
- NF: network function;
- NWDAF: network data analytics function;
- CN: core network;
- CNF: containerized network function;
- PCF: policy control function;
- SMF: session management function;
- UDM: user data management; and
- UPF: user plane function.

Hereinafter, the operation principle of embodiments according to the disclosure will be described in detail with reference to the accompanying drawings. The meanings of the terms used to describe the embodiments may be defined by the contents throughout the specification.

Herein, terms referring to network entities or network functions, terms referring to messages, terms referring to identification information, and the like are illustratively used for the sake of descriptive convenience. Therefore, the disclosure is not limited by the terms as described below, and other terms referring to subjects having equivalent technical meanings may also be used.

In the following description of the embodiments according to the disclosure, terms and names defined in the 5G system standards will be used for the sake of convenience, but the disclosure is not limited by these terms and names and may also be applied in the same way to systems that conform other standards.

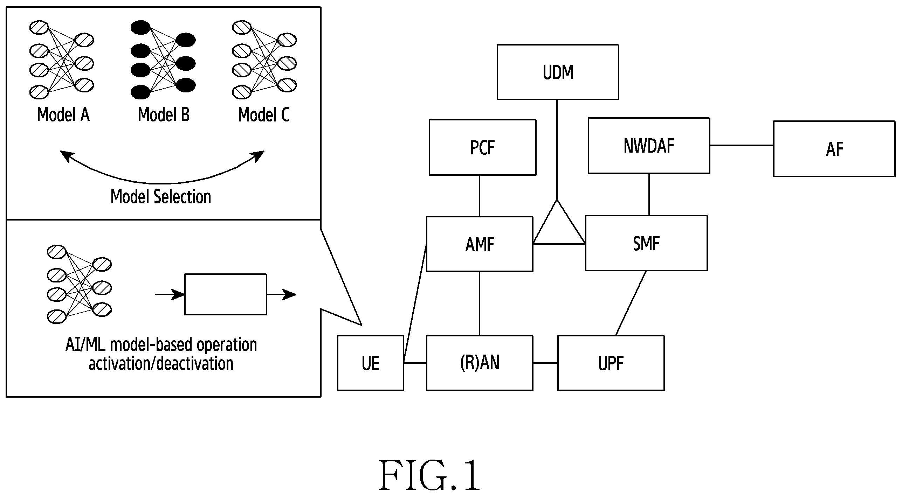

FIG. 1 illustrates a structure of a wireless communication system supporting an artificial intelligence-based operation according to an embodiment of the disclosure.

The structure of a wireless communication system supporting an artificial intelligence-based operation may include various network functions (NFs). FIG. 1 illustrates, for example, an access and mobility management function (AMF), a session management function (SMF), a unified data management (UDM), a data network (DN) or a local part of the DN that enables local access to the data network, a user plane function (UPF), a (radio) access network ((R)AN), and/or a user equipment (UE), which correspond to some of the network functions.

The UE may use an artificial intelligence model (e.g., a machine learning model) to perform an operation such as channel state information prediction, channel state information compression, and positioning so as to enhance wireless communication performance. For example, the UE may determine to use an artificial intelligence model for performing an operation, and, if there are multiple artificial intelligence models, select at least one model therefrom and perform an operation for improving wireless communication performance.

Each of the NFs may support the following functions.

The AMF may be a function or a device that serves both access to the radio access network and mobility management for the UE. The AMF may provide a function for access and mobility management in units of UEs, and one UE may be basically connected to one AMF.

The (R)AN may wirelessly transmit and receive data to and from the UE, and transmit and receive UE user plane data to and from the UPF. In addition, the (R)AN may perform access and mobility management for the UE in interworking with the AMF.

The data network (DN) may represent, for example, an operator service, Internet access, or a 3rd party service. The DN may transmit a downlink protocol data unit (PDU) to the UPF, or receive a PDU transmitted from the UE via the UPF. The local part of the DN is a part of the DN and may represent a data network that enables local access and thus provides a short data transmission path. The local part may be used to refer to a DN in which an edge application server is deployed to support an edge computing service.

A PCF may provide a function of receiving information on a packet flow from an application server and determining a policy such as mobility management, session management, etc. Specifically, the PCF may support a unified policy framework for controlling network operation and provide a policy rule to enable control plane function(s) (e.g., the AMF, the SMF, etc.) to execute the policy rule, and may support a function of implementing a front end to access relevant subscription information for policy determination in a unified data repository (UDR).

The SMF may provide a session management function, and when the UE has multiple sessions, the sessions may be managed by different SMFs, respectively.

The UDM may store subscription information of the UE, context used by the UE within the network, or policy data.

The UPF may transfer a downlink PDU received from the DN to the UE via the (R)AN and may transfer, to the DN, an uplink PDU received from the UE via the (R)AN .

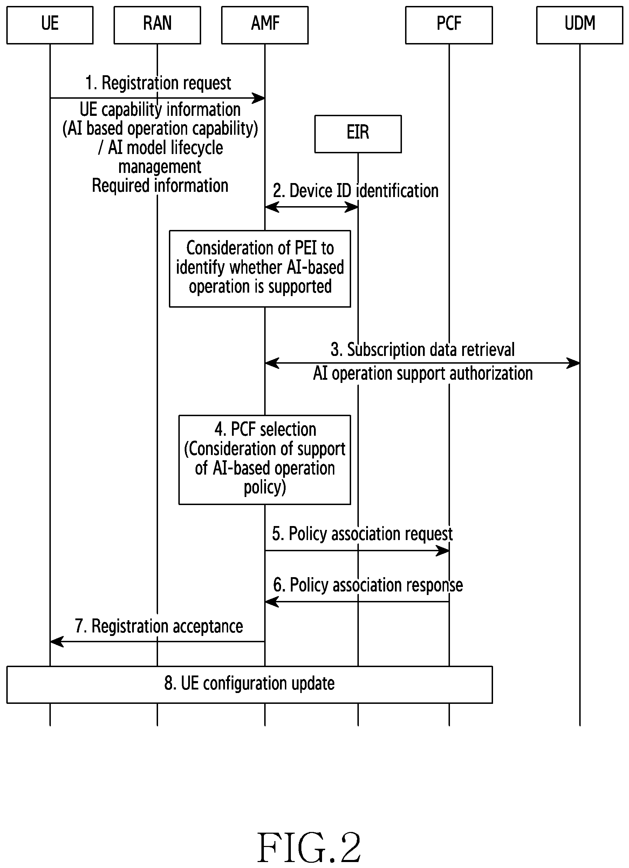

FIG. 2 illustrates a method of configuring policy information related to an artificial intelligence (AI)-based operation according to an embodiment of the disclosure.
1. A UE may transmit a registration request message to an AMF. When the UE supports an AI-based operation, the UE may transmit a registration request message including AI-based operation UE capability information. That is, the UE may transmit a registration request message including capability information of the UE regarding an AI-based operation. The AI-based operation UE capability of the UE may include at least one of the following pieces of information:
   - An indicator or index indicating that the UE supports an AI-based operation;
   - Information on an AI-based operation or function supported by the UE. For example, a list of operations such as channel state information (CSI) compression, CSI prediction, and positioning;
   - Information (e.g., a model identifier) on an AI (e.g., machine learning) model supported by the UE.
      The registration request message transmitted by the UE to the AMF may include information such as a UE identifier and a UE device identifier (permanent equipment identifier (PEI) or an international mobile equipment identity (IMEI)).
2. When the registration request message including the AI-based operation UE capability information is received, the AMF may identify information related to a corresponding UE device. The AMF may consider the UE device identifier (PEI or IMEI) in order to identify whether an AI-based operation is supported.

For example, the AMF may perform an operation of identifying whether a corresponding UE type or device is capable of performing an AI-based operation or whether an AI-based operation is prohibited for the corresponding UE type or device, based on a local configuration or information configured according to an operator policy.

Alternatively, the AMF may provide the UE device identifier to an equipment identity register (EIR) and receive information related to the UE device from the EIR to identify a UE device state related to an AI-based operation. The AMF may include an operation of identifying whether the corresponding UE type or device is capable of performing an AI-based operation or whether an AI-based operation is prohibited for the corresponding UE type or device, with respect to the UE device related to an AI-based operation.

3. The AMF may acquire subscriber information from a UDM. The AMF may identify information regarding whether an AI-based operation is authorized in the subscription information.

4. If the registration request includes AI-based operation UE capability, the AMF may select a PCF capable of providing a policy related to an AI-based operation. Alternatively, even if AI-based operation UE capability is not included, the AMF may select a PCF supporting AI-based UE operation capability according to a policy configured in the AMF.

In addition, if there is AI-based operation support allowance information for the UE in the subscriber information acquired from the UDM, the AMF may select a PCF capable of providing a policy related to an AI-based operation.

The PCF selected by the AMF in operation 4 may be the same PCF as a PCF that provides a UE policy or an access and mobility management policy, and the UE policy or access and mobility (AM) policy provided by the PCF may include a policy associated with an AI-based operation of the UE. That is, the AMF may select a PCF in consideration of support of an AI-based operation policy.

5. The AMF may transmit a policy association request message to the PCF selected in operation 4 above. The AMF may request a policy related to an AI-based operation from the PCF. The AMF may transmit, to the PCF, at least one piece of information among an AI-based operation policy request indicator, UE location information (cell ID, TAI, GPS coordinates, RAN ID, etc.), a UE identifier, a UE device identifier, a current access type of the UE (RAT information), a frequency (e.g., used frequency band information or carrier frequency information), and AI-based operation capability.

6. The PCF may generate a policy related to an AI-based operation, based on the information received from the AMF. In order to generate a policy related to an AI-based operation, the PCF may acquire detailed UE location information or UE location area characteristic information from another network function (e.g., GMLC, LMF, NWDAF, etc.) and use the same. The PCF may transmit, to the AMF, a policy association response message including policy information related to an AI-based operation, a UE identifier, a policy association ID, and policy valid area/time information. The policy information related to an AI-based operation may include at least one of pieces of information such as a model selection assistance rule and an AI-based operation activation rule.

The model selection assistance rule may refer to a rule for selecting, by the UE, an AI model (or machine learning model) used for an AI-based operation for improving wireless communication performance. For example, information such as area-based model selection rule information and time-based model selection rule information may be included.

The AI-based operation activation rule information may include a rule for an operation of activating/deactivating an AI-based operation of the UE. For example, the information may include a rule indicating activation or deactivation of an AI-based operation in a specific area.

If the model selection assistance rule and the AI-based operation activation rule include an area-based operation rule, the model selection assistance rule may include an area topology characteristic (e.g., UE or base station deployment density) and area-specific wireless channel characteristic assistance information, as the following examples (e.g., area characteristic information reflecting a varying wireless channel characteristic, such as information enabling distinguishment between an urban area and a rural area), which correspond to information usable for an operation for area-based model selection and AI-based operation activation.

**[Table 1] Area-specific wireless channel characteristic assistance information**

| Scenario (area wireless characteristic information) | Description | Scenario (area wireless characteristic information) | Description |
|---|---|---|---|
| UMa | Urban Macro | InF-SL | Indoor Factory with Sparse clutter and Low base station height (both Tx and Rx are below the average height of the clutter) |
| | This refers to a macro cell deployment environment scenario in an urban area. In a UMa environment, this may indicate an area wireless characteristic considering a building arrangement and a high user density in an urban area. | | |
| UMi | Urban Micro | InF-DL | Indoor Factory with Dense clutter and Low base station height (both Tx and Rx are below the average height of the clutter) |
| | This refers to a micro cell deployment environment scenario | | |
| | in an urban area. In a UMi environment, this may indicate an area wireless characteristic considering a building arrangement and a high user density in an urban area. | | This may indicate an area wireless characteristic when a base station is installed at a low position in a factory having a low device or user density and low complexity. |
| RMa | Rural Macro | InF-SH | Indoor Factory with Sparse clutter and High base station height (Tx or Rx elevated above the clutter) |
| | This refers to a macro cell deployment environment scenario in a rural area. In an RMa environment, this may indicate an area wireless characteristic including a characteristic such as a low building and user density in a rural area. | | |
| | | | This may indicate an area wireless characteristic when a base station is installed at a high position in a factory having a low device or user density and low complexity. |
| | | | |
| InF-DH | Indoor Factory with Dense clutter and High base station height (Tx or Rx elevated above the clutter) | | |
| | This may indicate an area wireless characteristic when a base station is installed at a high position in a factory having a high device or user density and high complexity. (The complex internal environment may result in a characteristic where significant echoes may occur) | | |
| InF-HH | Indoor Factory with High Tx and High Rx (both elevated above the clutter) | | |
| | This may indicate an area wireless characteristic when a base station is installed at a high position in a factory. This may indicate a case where both a transmitter and a receiver are deployed at a high position. | | |

The area topology information and the area-specific wireless channel characteristic assistance information may be represented as specific index information assigned by an operator, and then be shared and utilized between a network function and the UE.

In an embodiment according to the disclosure, a method in which the AMF acquires policy information related to an AI-based operation from the PCF has been described. However, the AMF may acquire policy information related to an AI-based operation from another network function related to an AI-based operation or may determine a policy related to an AI-based operation by using information configured in the AMF.
7. The AMF may transmit, to the UE, an indicator indicating allowance or availability of an AI-based operation and the policy information related to an AI-based operation. In this process, the AMF may transmit the policy information related to an AI-based operation to the RAN, and the RAN may make a decision on whether to use the policy information and then provide the corresponding information to the UE.
8. The UE may perform a model selection assistance rule operation or an AI-based operation activation rule operation, based on the indicator indicating allowance or availability of an AI-based operation and the policy related to an AI-based operation, which is received from the AMF or a base station. For example, if the UE receives area topology information (base station density or UE density) and an area-specific wireless channel characteristic assistance information (UMa) value corresponding to an area where the UE is currently located, or a corresponding index value, the UE may determine to perform AI-based operation activation for an area having a particular base station/UE density and a particular wireless channel characteristic assistance information (Uma) value, may select to use an AI model (or a machine learning model or deep learning model) trained for the area having the particular base station/UE density and the particular wireless channel characteristic assistance information (Uma) value, and may use the AI model for an operation such as CSI compression/prediction.

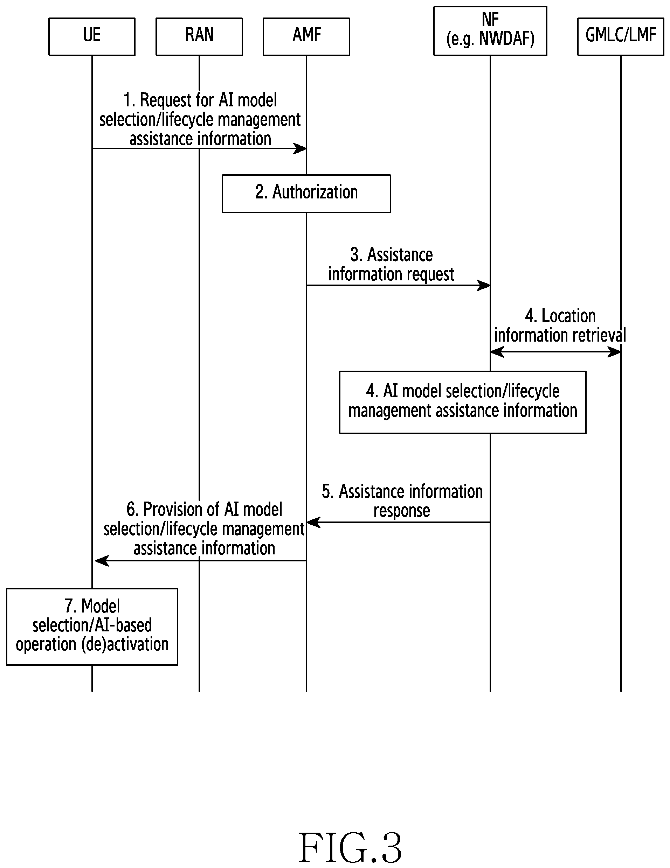

FIG. 3 illustrates a method of providing model selection and management assistance information to a UE supporting an artificial intelligence-based operation according to an embodiment of the disclosure. With reference to FIG. 3, a method of providing assistance information related to an AI-based operation to a UE is described.
1. A UE may transmit a request for AI model selection/lifecycle management assistance information to an AMF. Such a request may be transmitted when the UE supports an AI-based operation. The UE may transmit a corresponding request message including AI-based operation UE capability information. The AI-based operation UE capability of the UE may include at least one of the following pieces of information:
   - An indicator or index indicating that the UE supports an AI-based operation;
   - Information on an AI-based operation or function supported by the UE. For example, a list of operations such as channel state information (CSI) compression, CSI prediction, and positioning;
   - Information (e.g., a model identifier list) on an AI (e.g., machine learning) model supported by the UE.
      A registration request message transmitted by the UE to the AMF may include information such as a UE identifier and a UE device identifier (PEI or IMEI).
2. When the AI model selection/lifecycle management assistance information request message is received, the AMF may perform authorization for a corresponding service. The AMF may perform at least one of an authorization operation or a support availability identification operation as follows.

The AMF may identify whether a RAN to which the UE is currently connected supports/allows an AI-based operation (or whether the RAN supports or allows performance of an AI-based operation). The AMF may identify whether an AI-based operation is supported/allowed in an area where the UE is currently located. The AMF may include an operation of identifying whether a corresponding UE type or device is capable of performing an AI-based operation or whether an AI-based operation is prohibited for the corresponding UE type or device, based on a local configuration or information configured according to an operator policy.

The AMF may provide the UE device identifier to an equipment identity register (EIR) to identify a UE device state related to an AI-based operation in interworking with the EIR. The AMF may perform an operation of identifying whether the corresponding UE type or device is capable of performing an AI-based operation or whether an AI-based operation is prohibited for the corresponding UE type or device, with respect to the UE device related to an AI-based operation. The AMF may acquire subscriber information from a UDM. The AMF may identify information regarding whether an AI-based operation is authorized in the subscription information.

3. If the registration request includes AI-based operation UE capability and support of an AI-based operation is allowed/available, the AMF may perform an operation of obtaining AI model selection/lifecycle management assistance information from an AI operation-related network function (e.g., NWDAF). According to an embodiment, the AMF may search for and select an AI operation-related network function that supports a service function of providing AI model selection/lifecycle management assistance information. In such a search and selection operation, the AMF may search for and select an AI operation-related network function by using AI operation-related NF information in a local configuration of the AMF, or by providing a network repository function (NRF) with UE device type/identifier information, a UE identifier, AI model selection/lifecycle management assistance support information, UE location information, a cell ID, a RAN ID, RAT information, or a frequency (e.g., used frequency band information or carrier frequency information).

The AMF may request AI model selection/lifecycle management assistance information from the selected AI operation-related network function (e.g., NWDAF). The (assistance information request) AMF may transmit, to the AI operation-related network function, at least one piece of information among an AI-based operation policy request indicator, UE location information (cell ID, TAI, GPS coordinates, RAN ID, etc.), a UE identifier, a UE device identifier, a current access type of the UE, and AI-based operation capability. In order to include detailed location information of the UE in a corresponding request message, the AMF may request and obtain the detailed location information of the UE from a gateway mobile location center (GMLC) or a location management function (LMF), and provide same to the AI operation-related network function.

4. The AI operation-related network function (e.g., NWDAF) may determine AI model selection/lifecycle management assistance information in consideration of the information received from the AMF. In order to determine AI model selection/lifecycle management assistance information, the NF may acquire detailed UE location information or UE location area characteristic information from another network function (e.g., GMLC, LMF, etc.) and use the same.

5. The AI operation-related network function may transmit, to the AMF, a response message including the AI model selection/lifecycle management assistance information, a UE identifier, a policy association ID, and policy valid area/time information. The AI model selection/lifecycle management assistance information may include at least one of pieces of information such as model selection assistance information and AI-based operation activation information.

The model selection assistance information may refer to assistance information used by the UE to select an AI model (e.g., machine learning model or deep learning model) used for an AI-based operation for improving wireless communication performance. For example, the model selection assistance information may include information such as area-based model selection assistance information and time-based model selection assistance information.

AI-based operation activation assistance information may include information usable as an assistance for determining an operation of activating/deactivating an AI-based operation of the UE. For example, AI-based operation activation or deactivation assistance information for a specific area may be included.

If the model selection assistance information and the AI-based operation activation information include an area-based operation rule, the model selection assistance information may include an area topology characteristic (e.g., UE or base station deployment density) and area-specific wireless channel characteristic assistance information (e.g., area characteristic information reflecting a varying wireless channel characteristic, such as information enabling distinguishment between an urban area and a rural area), which correspond to information usable for an operation for area-based model selection and AI-based operation activation.

The area-specific wireless channel characteristic assistance information is described in [Table 1] above.

6. The AMF may transmit, to the UE, an indicator indicating allowance or availability of an AI-based operation and the AI-based operation activation assistance information. According to an embodiment, the AMF may map information such as the model selection assistance information and the AI-based operation activation information described in operation 5 to the AI-based operation UE capability of the UE with respect to the AI-based operation activation assistance information, and provide the mapped information and capability to the UE. For example, if a model identifier is included in the AI-based operation UE capability, the AMF may map the model selection assistance information and the AI-based operation activation information to the specific model identifier and provide the mapped information and identifier to the UE. According to an embodiment, only one of the model selection assistance information and the AI-based operation activation information may be provided.

7. The UE may perform a model selection assistance rule operation or an AI-based operation activation rule operation by using the indicator indicating allowance or availability of an AI-based operation and the AI-based operation activation assistance information (model selection assistance information and AI-based operation activation information), which is received from the AMF via a base station. For example, if the UE receives area topology information (base station density or UE density) and an area-specific wireless channel characteristic assistance information (UMa) value corresponding to an area where the UE is currently located, or a corresponding index value, the UE may determine to perform AI-based operation activation for an area having a particular base station/UE density and a particular wireless channel characteristic assistance information (Uma) value, may select to use an AI model (e.g., a machine learning model or deep learning model) trained for the area having the particular base station/UE density and the particular wireless channel characteristic assistance information (Uma) value, and may use the AI model for an operation such as CSI compression/prediction.

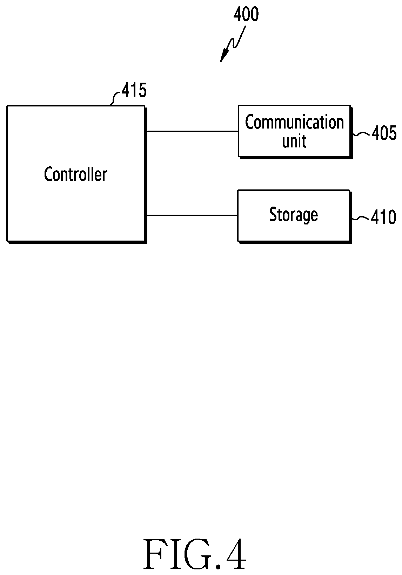

FIG. 4 illustrates an example of a functional structure of a UE according to an embodiment of the disclosure. The structure illustrated in FIG. 4 may be understood as a structure of the UE. As used herein, such terms as "... unit" and "... er" refer to a unit configured to process at least one function or operation, and may be implemented as hardware, software, or a combination of hardware and software. The UE in FIG. 4 may correspond to the UE n FIGS. 1 to 3.

Referring to FIG. 3, the UE may include a communication unit 405, a storage 410, and a controller 415.

The communication unit 405 may perform functions for transmitting/receiving signals through radio channels. For example, the communication unit 405 may performs functions of conversion between baseband signals and bitstrings according to the physical layer specifications of the system. For example, during data transmission, the communication unit 405 may encode and modulate a transmitted bitstring to generate complex symbols. In addition, during data reception, the communication unit 405 may demodulate and decode a baseband signal to restore a received bitstring. In addition, the communication unit 405 may up-convert a baseband signal into an RF band signal and then transmit the converted RF band signal through an antenna, and down-convert an RF band signal received through an antenna into a baseband signal. For example, the communication unit 405 may include a transmission filter, a reception filter, an amplifier, a mixer, an oscillator, a DAC, and an ADC.

In addition, the communication unit 405 may include multiple transmission/reception paths. Moreover, the communication unit 405 may include at least one antenna array including multiple antenna elements. In terms of hardware, the communication unit 405 may include a digital circuit and an analog circuit (e.g., radio frequency integrated circuit (RFIC)). The digital circuit and the analog circuit may be implemented as a single package. In addition, the communication unit 405 may include multiple RF chains. Furthermore, the communication unit 405 may perform beamforming.

The communication unit 405 may transmit and receive signals as described above. Accordingly, all or part of the communication unit 405 may be referred to as a "transmitter", a "receiver", or a "transceiver". In addition, as used in the following description, the meaning of "transmission and reception performed through a radio channel" includes the meaning that the above-described processing is performed by the communication unit 405.

The storage 410 may store basic programs, application programs, and data, such as configuration information, for operation of the main base station. The storage 410 may include a volatile memory, a nonvolatile memory, or a combination of a volatile memory and a nonvolatile memory. In addition, the storage unit 410 may provide data stored therein at the request of the controller 415.

The controller 415 may control the overall operation of the UE. For example, the controller 415 may transmit and receive signals through the communication unit 405. In addition, the controller 415 records data in the storage 410 and reads the data from the storage 410. In addition, the controller 415 may perform functions of protocol stacks required by communication specifications. To this end, the controller 415 may include at least one processor or microprocessor, or may be a part of a processor. In addition, a part of the communication unit 405 and the controller 415 may be referred to as a communication processor (CP). According to various embodiments, the controller 415 may control to perform synchronization by using a wireless communication network. For example, the controller 415 may control the UE to perform operations according to various embodiments as described below.

According to various embodiments of the disclosure, the UE may be configured by a mobile equipment (ME) and a universal mobile telecommunications service (UMTS) subscriber identity module (USIM). The ME may include a mobile terminal (MT) and a terminal equipment (TE). The MT may be a part in which a radio access protocol is operated, and the TE may be a part in which a control function is operated. For example, in the case of a wireless communication terminal (e.g., mobile phone), the MT and the TE may be integrated, and in the case of a notebook, the MT and the TE may be separated. As used herein, the ME and the TE may be represented as separate entities according to the operations of the respective components, but the disclosure is not limited thereto, and it will be apparent that, in describing various embodiments of the disclosure, the ME and the TE may be collectively represented as the terminal (e.g., UE) or the ME may be represented as the terminal.

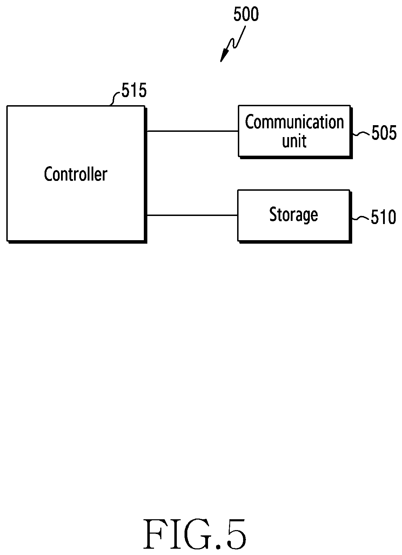

FIG. 5 illustrates an example of a functional structure of a core network entity according to an embodiment of the disclosure. A structure of a core network entity in a wireless communication system according to various embodiments of the disclosure is illustrated. The structure illustrated in FIG. 5 may be understood as a structure of a device having at least one function among network entities including the AMF in FIG. 1. As used herein, such terms as "... unit" and "... er" refer to a unit configured to process at least one function or operation, and may be implemented as hardware, software, or a combination of hardware and software. The network entity in FIG. 5 may be at least one of network entities described in FIGS. 1 to 3.

Referring to FIG. 5, the core network entity may include a communication unit 505, a storage 510, and a controller 515.

The communication unit 505 may provide an interface for communicating with other devices in the network. That is, the communication unit 505 converts a bitstring, transmitted from the core network entity to any other device, into a physical signal, and converts a physical signal, received from any other device, into a bitstring. The communication unit 505 may transmit/receive signals. Accordingly, the communication unit 505 may be referred to as a modem, a transmitter, a receiver, or a transceiver. The communication unit 505 enables the core network entity to communicate with other devices or the system via a backhaul connection (e.g., wired backhaul or wireless backhaul) or via a network.

The storage 510 may store basic programs, application programs, and data, such as configuration information, for the operation of the network entity. The storage 510 may include a volatile memory, a nonvolatile memory, or a combination of a volatile memory and a nonvolatile memory. In addition, the storage unit 510 may provide data stored therein at the request of the controller 515.

The controller 515 may control the overall operation of the core network device. For example, the controller 515 may transmit and receive signals through the communication unit 505. In addition, the controller 515 records data in the storage 510 and reads the data from the storage 510. To this end, the controller 515 may include at least one processor. According to various embodiments, the controller 515 may control to perform synchronization by using a wireless communication network. For example, the controller 515 may control the core network entity to perform operations according to various embodiments as described below.

In the above description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described above, and other terms referring to subjects having equivalent technical meanings may also be used.

The above-described operations of the embodiments may be implemented by providing any unit of a device with a memory device storing corresponding program codes. That is, a controller in the device may perform the above-described operations by reading and executing the program codes stored in the memory device by means of a processor or central processing unit (CPU).

Various units or modules of an entity or terminal device set forth herein may be operated using hardware circuits such as complementary metal oxide semiconductor-based logic circuits, firmware, or hardware circuits such as combinations of software and/or hardware and firmware and/or software embedded in a machine-readable medium. For example, various electrical structures and methods may be implemented using transistors, logic gates, and electrical circuits such as application-specific integrated circuits.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, local area network (LAN), wide LAN (WLAN), and storage area network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by an access and mobility management function (AMF) entity in a wireless communication system, the method comprising:
receiving, from a terminal via a base station, a first message for requesting first information on an artificial intelligence (AI) model;
determining whether an AI-based operation of the terminal is allowed;
acquiring the first information from a network function entity; and
transmitting, to the terminal via the base station, a second message including the first information.

2. The method of claim 1, wherein the first message comprises capability information of the terminal regarding the AI-based operation, and
wherein the capability information comprises at least one of an indicator indicating whether the terminal supports the AI-based operation, information indicating a function of the AI-based operation supported by the terminal, or information on the AI model supported by the terminal.

3. The method of claim 1, wherein determining whether the AI-based operation of the terminal is allowed is performed based on at least one of subscriber information of the terminal, a type of the terminal, and a location of the terminal.

4. The method of claim 1, wherein acquiring the first information from the network function entity comprises:
searching for the network function entity;
transmitting, to the network function entity, a third message for requesting the first information; and
receiving, from the network function entity, a fourth message including the first information.

5. The method of claim 4, wherein the third message comprises at least one of an indicator for requesting a policy associated with the AI-based operation, information on a location of the terminal, an identifier of the terminal, a device identifier of the terminal, an access type of the terminal, or a capability of the terminal, and
wherein the first information comprises at least one of second information on a deployment density of the terminal or the base station for an area, or third information on radio channel characteristics associated with the area.

6. A method performed by a terminal in a wireless communication system, the method comprising:
transmitting, to an access and mobility management function (AMF) via a base station, a first message for requesting first information on an artificial intelligence (AI) model;
receiving, from the AMF via the base station, a second message including the first information; and
based on the first information, selecting the AI model or activating or deactivating an AI - based operation.

7. The method of claim 6, wherein the first message comprises capability information of the terminal regarding the AI -based operation,
wherein the capability information comprises at least one of an indicator indicating whether the terminal supports the AI-based operation, information indicating a function of the AI-based operation supported by the terminal, or information on the AI model supported by the terminal, and
wherein the first information comprises at least one of second information on a deployment density of the terminal or the base station for an area, or third information on radio channel characteristics associated with the area.

8. An access and mobility management function (AMF) entity in a wireless communication system, the AMF entity comprising:
a transceiver; and
a controller connected to the transceiver, wherein the controller is configured to:
receive, from a terminal via a base station, a first message for requesting first information on an artificial intelligence (AI) model;
determine whether an AI-based operation of the terminal is allowed;
acquire the first information from a network function entity; and
transmit, to the terminal via the base station, a second message including the first information.

9. The AMF entity of claim 8, wherein the first message comprises capability information of the terminal regarding the AI-based operation, and
wherein the capability information comprises at least one of an indicator indicating whether the terminal supports the AI-based operation, information indicating a function of the AI-based operation supported by the terminal, or information on the AI model supported by the terminal.

10. The AMF entity of claim 8, wherein the controller is configured to determine whether the AI-based operation of the terminal is allowed based on at least one of subscriber information of the terminal, a type of the terminal, and a location of the terminal.

11. The AMF entity of claim 8, wherein the controller is further configured to:
search for the network function entity to acquire the first information from the network function entity;
transmit, to the network function entity, a third message for requesting the first information; and
receive, from the network function entity, a fourth message including the first information.

12. The AMF entity of claim 11, wherein the third message comprises at least one of an indicator for requesting an AI-based operation policy, information on a location of the terminal, an identifier of the terminal, a device identifier of the terminal, an access type of the terminal, or a capability of the terminal associated with the AI-based operation.

13. The AMF entity of claim 8, wherein the first information comprises at least one of second information on a deployment density of the terminal or the base station for an area, and third information on radio channel characteristics associated with the area.

14. A terminal in a wireless communication system, the terminal comprising:
a transceiver; and
a controller connected to the transceiver, wherein the controller is configured to:
transmit, to an access and mobility management function (AMF) via a base station, a first message for requesting first information on an artificial intelligence (AI) model;
receive, from the AMF via the base station, a second message including the first information; and
based on the first information, select the AI model or activate or deactivate an AI model-based operation.

15. The terminal of claim 14, wherein the first message comprises capability information of the terminal regarding the AI-based operation,
wherein the capability information comprises at least one of an indicator indicating whether the terminal supports the AI-based operation, information indicating a function of the AI-based operation supported by the terminal, or information on the AI model supported by the terminal, and
wherein the first information comprises at least one of second information on a deployment density of the terminal or the base station for an area, and third information on radio channel characteristics associated with the area.
